# EUROPEAN PATENT APPLICATION

(11) **EP 4 838 631 A1**
(43) Date of publication of application: **11.11.2026**
(21) Application number: 24936585.9
(22) Date of filing: 13.08.2024
(51) Int. Cl.: H01M 10/6557, H01M 10/6567, H01M 10/6568, H01M 10/625

(54) **LIQUID-COOLING PLATE ASSEMBLY, THERMAL MANAGEMENT COMPONENT, BATTERY, AND ELECTRIC DEVICE**

(30) Priority: 22.04.2024 CN 202420837167 U
(71) Applicant: Contemporary Amperex Technology Co., Limited, Ningde, Fujian 352100 (CN)
(72) Inventor: ZHOU, Cong, Ningde, Fujian 352100 (CN); HOU, Yuepan, Ningde, Fujian 352100 (CN)
(74) Representative: Lorenz Seidler Gossel Part. mbB
(86) International application number: PCT/CN2024/111817
(87) International publication number: WO 2025/222692

(57) **Abstract**

A liquid-cooling plate assembly (13), a thermal management component, a battery (10), and an electric device, which belong to the technical field of batteries. The liquid-cooling plate assembly comprises a heat exchange plate (131) and a current collector, wherein a plurality of cooling channels (1311) are formed inside the heat exchange plate; the current collector is connected to an end of the heat exchange plate and is in communication with the plurality of cooling channels; and a first section (1324) of one of the current collector and the heat exchange plate is sleeved outside a second section (1312) of the other one of the current collector and the heat exchange plate, the first section is made of a transparent material, the second section is made of a light-absorbing material, and the surface of at least one of the first section and the second section facing the other one of the first section and the second section is provided with a connection compensation structure that is not flush with the surface.

## Description

### CROSS-REFERENCE TO RELATED APPLICATIONS

The present application is based on and claims priority to Chinese Patent Application No. 202420837167.2, filed on April 22, 2024, the entire disclosure of which is incorporated herein by reference.

### TECHNICAL FIELD

The present application relates to the technical field of batteries, and specifically, to a liquid-cooling plate assembly, a thermal management component, a battery, and an electric device.

### BACKGROUND

In recent years, new energy vehicles have been developed with a great leap. In the field of electric vehicles, power batteries play an irreplaceably important role as a power source of the electric vehicle. A battery is composed of a battery box and a plurality of battery cells accommodated in the battery box. Development of science and technology has led to growing market demand for fast-charging batteries, and higher requirements are put forward for thermal management component systems of the batteries.

Currently, a liquid-cooling plate assembly is disposed on a surface of a battery cell. The liquid-cooling plate assembly is configured to cool the battery cell, and includes a heat exchange plate and a current collector in communication with the heat exchange plate. In the related art, both the heat exchange plate and the current collector are made of metal materials, and are mainly connected via a brazing process. Consequently, joining quality is difficult to ensure, which results in poor connection reliability between the heat exchange plate and the current collector, and affects subsequent use of the liquid-cooling plate assembly.

### SUMMARY

The present application provides a liquid-cooling plate assembly, a thermal management component, a battery, and an electric device, thereby improving joining quality, and therefore improving connection reliability between a heat exchange plate and a current collector.

According to a first aspect, an embodiment of the present application provides a liquid-cooling plate assembly, comprising:
a heat exchange plate, wherein a plurality of cooling channels are formed inside the heat exchange plate; and
a current collector, wherein the current collector is connected to an end of the heat exchange plate and is in communication with the plurality of cooling channels, wherein
a first section of one of the current collector and the heat exchange plate is sleeved outside a second section of the other one of the current collector and the heat exchange plate, the first section is made of a transparent material, the second section is made of a light-absorbing material, and the surface of at least one of the first section and the second section facing the other one of the first section and the second section is provided with a connection compensation structure that is not flush with the surface.

In the foregoing technical solution, the connection compensation structure is provided to form a welded structure by means of self-melting, without introducing a new material at a welding position. This reduces joining quality problems such as flux migration and contamination caused by brazing, and improves connection reliability between the first section and the second section.

In some embodiments, the connection compensation structure circumferentially extends along an inner surface of the first section, and/or the connection compensation structure circumferentially extends along an outer surface of the second section.

In the foregoing technical solution, the connection compensation structure is a closed ring to achieve ring sealing of the first section and the second section.

In some embodiments, there are a plurality of connection compensation structures, and the plurality of connection compensation structures are arranged at intervals along the length direction of the heat exchange plate.

In the foregoing technical solution, the plurality of connection compensation structures are provided to achieve an interlocking connection between the first section and the second section, so that connection stability and a sealing effect are further improved, to reduce leakage of cooling liquid at a junction between the first section and the second section.

In some embodiments, the first section of the current collector is sleeved on the second section of the heat exchange plate, a support rib is provided in the current collector, and the support rib abuts against an inner wall of the cooling channel.

In the foregoing technical solution, the support rib that abuts against the inner wall of the cooling channel is provided, so that deformation of the second section of the heat exchange plate can be reduced.

In some embodiments, there are a plurality of support ribs, the plurality of support ribs are circumferentially arranged at intervals along the inner surface of the first section, and at least one support rib is provided in each of the plurality of cooling channels.

In some embodiments, the first section is provided with a limiting surface configured to abut against an outer end surface of the second section.

In the foregoing technical solution, the limiting surface configured to abut against the outer end surface of the second section is provided to limit the second section or the first section from continuing to move, thereby protecting the heat exchange plate and the current collector.

In some embodiments, the first section of the current collector is sleeved on the second section of the heat exchange plate; and
a connection compensation structure located on the current collector protrudes from the inner surface of the first section or is recessed into the inner surface of the first section.

In some embodiments, the first section of the current collector is sleeved on the second section of the heat exchange plate; and
a connection compensation structure located on the heat exchange plate is recessed into the outer surface of the second section.

In some embodiments, the first section of the current collector is sleeved on the second section of the heat exchange plate; and
a connection compensation structure located on the current collector protrudes from the inner surface of the first section, and a connection compensation structure located on the heat exchange plate is recessed into the outer surface of the second section.

According to a third aspect, an embodiment of the present application provides a thermal management component, comprising a plurality of liquid-cooling plate assemblies according to any one of the foregoing embodiments, wherein the plurality of liquid-cooling plate assemblies are disposed in parallel, and current collectors of two adjacent liquid-cooling plate assemblies are in communication.

According to a fourth aspect, an embodiment of the present application provides a battery, comprising battery cells and the thermal management component according to any one of the foregoing embodiments, wherein the heat exchange plate is disposed between two adjacent battery cells.

An embodiment of the present application provides an electric device, comprising the battery according to the foregoing embodiment, wherein the battery is configured to supply electric energy.

In the foregoing technical solution, a separator is provided in an electrode assembly, so that powder that may be generated in a bent portion during production is separated, to effectively reduce a risk of powder shedding in the bent portion, thereby improving a production yield of the electrode assembly, improving the use stability of the service life of the electrode assembly, and assisting in improving the service life and stability of the electric device.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of a vehicle according to some embodiments of the present application;
FIG. 2 is an exploded view of a structure of a battery according to some embodiments of the present application;
FIG. 3 is a partial schematic structural diagram of the battery according to some embodiments of the present application;
FIG. 4 is a schematic structural diagram of a liquid-cooling plate assembly according to some embodiments of the present application;
FIG. 5 is a partial schematic structural diagram 1 of the liquid-cooling plate assembly according to some embodiments of the present application;
FIG. 6 is a cross-sectional view at A-A in FIG. 5;
FIG. 7 is a schematic structural diagram of a current collector according to some embodiments of the present application;
FIG. 8 is a side view of a heat exchange plate according to some embodiments of the present application;
FIG. 9 is a partial schematic structural diagram 2 of the liquid-cooling plate assembly according to some embodiments of the present application;
FIG. 10 is a cross-sectional view at B-B in FIG. 9; and
FIG. 11 is a partial schematic structural diagram of the heat exchange plate according to some embodiments of the present application.

### Reference numerals:

vehicle 1, battery 10, box 11, first box body 111, second box body 112, and battery cell 12;
liquid-cooling plate assembly 13, heat exchange plate 131, cooling channel 1311, second section 1312, current collector 132, support rib 1321, limiting surface 1322, connecting pipe 1323, first section 1324, and connection compensation structure 133; and
motor 20 and controller 30.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. Those skilled in the art explicitly and implicitly understand that the described embodiments in the present application may be combined with another embodiment.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the present application, "plurality" means two or more than two (including two). Similarly, "a plurality of groups" means two or more than two groups, and "a plurality of pieces" means two or more than two pieces.

A battery cell mentioned in the embodiments of the present application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of the present application. The battery cell may be in a shape of a cylinder, a flat body, a cuboid, or the like, which is not limited in the embodiments of the present application. The battery cells are generally classified into three types in terms of packaging manner: cylindrical battery cells, prismatic battery cells, and pouch battery cells, which are not limited in the embodiments of the present application.

A battery mentioned in the embodiments of the present application refers to a single physical module including one or a plurality of battery cells to provide a higher voltage and capacity. For example, the battery mentioned in the present application may include a battery module or a battery pack, etc. The battery generally includes a box for encapsulating one or a plurality of battery cells or one or a plurality of battery modules. The box can prevent liquid or other foreign objects from affecting charging or discharging of the battery cells.

The battery cell includes a housing, an electrode assembly, and an electrolyte, where the housing is configured to accommodate the electrode assembly and the electrolyte. The electrode assembly includes a positive electrode sheet, a negative electrode sheet, and a separator. Working of the battery cell mainly relies on migration of metal ions between the positive electrode sheet and the negative electrode sheet. The positive electrode sheet includes a positive electrode current collector and a positive electrode active material layer. A surface of the positive electrode current collector is coated with the positive electrode active material layer. A portion that is of the positive electrode current collector and that is not coated with the positive electrode active material layer protrudes from a portion that is of the positive electrode current collector and that is coated with the positive electrode active material layer, and the portion that is of the positive electrode current collector and that is not coated with the positive electrode active material layer is used as a positive electrode tab. A lithium-ion battery is used as an example, for which, the positive electrode current collector may be made of aluminum, and the positive electrode active material may be lithium cobalt oxide, lithium iron phosphate, ternary lithium, lithium manganate oxide, or the like. The negative electrode sheet includes a negative electrode current collector and a negative electrode active material layer. A surface of the negative electrode current collector is coated with the negative electrode active material layer. A portion that is of the negative electrode current collector and that is not coated with the negative electrode active material layer protrudes from a portion that is of the negative electrode current collector and that is coated with the negative electrode active material layer, and the portion that is of the negative electrode current collector and that is not coated with the negative electrode active material layer is used as a negative electrode tab. The negative electrode current collector may be made of copper, and the negative electrode active material may be carbon, silicon, or the like. To ensure that a large current passes through without any fusing, a plurality of positive electrode tabs are provided and stacked together, and a plurality of negative electrode tabs are provided and stacked together.

The separator may be made of PP (polypropylene, polypropylene), PE (polyethylene, polyethylene), or the like.

In recent years, new energy vehicles have been developed with a great leap. In the field of electric vehicles, power batteries play an irreplaceably important role as a power source of the electric vehicle. A battery is composed of a box body and a plurality of battery cells accommodated in the box body. As a core component of new energy vehicles, the battery has relatively high requirements in terms of both safety and cycle life.

Development of science and technology has led to growing market demand for fast-charging batteries, and higher requirements are put forward for thermal management component systems of the batteries. Currently, a liquid-cooling plate assembly is disposed on a surface of a battery cell. The liquid-cooling plate assembly is configured to cool the battery cell, and includes a heat exchange plate and a current collector in communication with the heat exchange plate. In the related art, both the heat exchange plate and the current collector are made of metal materials, and are mainly connected via a brazing process. Consequently, joining quality problems such as flux contamination and migration are likely to occur, and joining quality is difficult to ensure, which results in poor connection reliability between the heat exchange plate and the current collector, and affects subsequent use of the liquid-cooling plate assembly.

Based on the foregoing consideration, to solve the problem that the connection reliability achieved between the heat exchange plate and the current collector through joining is poor and the subsequent use of the liquid-cooling plate assembly is affected, a liquid-cooling plate assembly is designed in the present application. The liquid-cooling plate assembly includes a heat exchange plate and a current collector, where a plurality of cooling channels are formed inside the heat exchange plate; and the current collector is connected to an end of the heat exchange plate and is in communication with the plurality of cooling channels, where a first section of one of the current collector and the heat exchange plate is sleeved outside a second section of the other one of the current collector and the heat exchange plate, the first section is made of a transparent material, the second section is made of a light-absorbing material, and the surface of at least one of the first section and the second section facing the other one of the first section and the second section is provided with a connection compensation structure that is not flush with the surface.

In the liquid-cooling plate assembly of this structure, the first section on an outer side is made of the transparent material, and the second section on an inner side is made of the light-absorbing material. A laser beam can pass through the first section to radiatively heat an outer surface of the second section, heat of the outer surface of the second section is transferred to an inner surface of the first section through heat conduction, and the temperature between the first section and the second section increases, so that a molten pool is formed between contacting surfaces of the first section and the second section. After laser welding is completed, molten materials between the first section and the second section are solidified, so that the heat exchange plate is joined to the current collector, without introducing new flux, thereby reducing joining quality problems such as flux migration and contamination caused by brazing. In addition, the surface of the at least one of the first section and the second section facing the other one of the first section and the second section is provided with the connection compensation structure that is not flush with the surface, so that the connection compensation structure and other surfaces are melted to different extents in a laser welding process, to form an interlocking structure with other parts in shape, thereby further improving connection reliability between the first section and the second section.

According to the liquid-cooling plate assembly provided in the embodiments of the present application, the connection compensation structure is provided to form a welded structure by means of self-melting, without introducing a new material at a welding position. This reduces the joining quality problems such as flux migration and contamination caused by brazing, and improves the connection reliability between the first section and the second section.

The liquid-cooling plate assembly disclosed in the embodiments of the present application is applicable to, but not limited to, an electric device such as a vehicle, a ship, or an aircraft. The liquid-cooling plate assembly, a thermal management component, and a battery that are disclosed in the present application may be used, to facilitate improvement of an application range of the liquid-cooling plate assembly and reduction of assembly difficulty of the liquid-cooling plate assembly.

An embodiment of the present application provides an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate the description, in the following embodiments, as an example for description, an electric device in an embodiment of the present application is a vehicle.

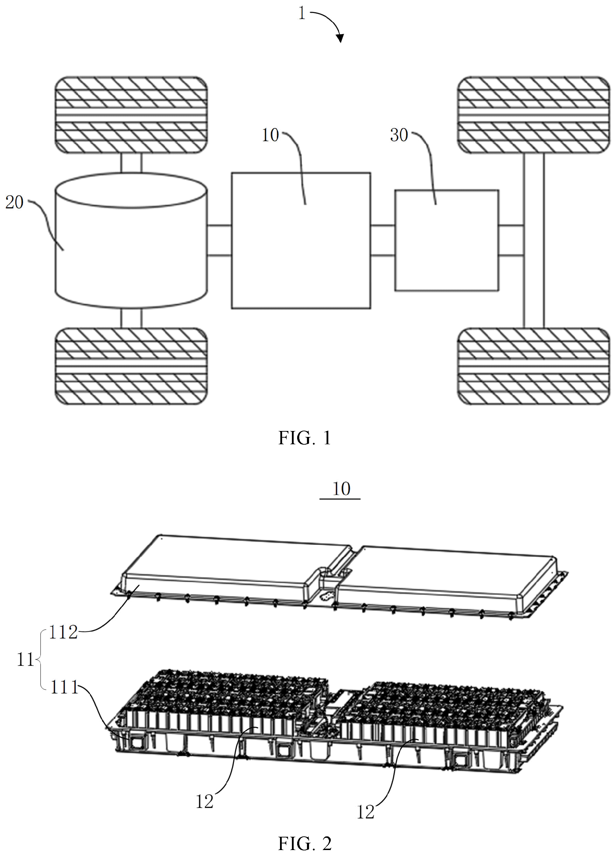

As shown in FIG. 1, FIG. 1 is a schematic structural diagram of a vehicle 1 according to an embodiment of the present application. The vehicle 1 may be a fuel vehicle, a gas vehicle, or a new energy vehicle, and the new energy vehicle may be a battery electric vehicle, a hybrid electric vehicle, or a range-extended electric vehicle, or the like. A motor 20, a controller 30, and a battery 10 may be arranged inside the vehicle 1. The controller 30 is configured to control the battery 10 to supply power to the motor 20. For example, the battery 10 may be arranged at the bottom, at the head, or at the tail of the vehicle 1. The battery 10 may be configured to supply power to the vehicle 1. For example, the battery 10 may serve as an operating power source of the vehicle 1, and is used for a circuit system of the vehicle 1, for example, used for operational power demands for starting, navigation, and running of the vehicle 1. In another embodiment of the present application, the battery 10 may serve not only as an operating power source of the vehicle 1, but also as a driving power source of the vehicle 1, to replace or partially replace fuel or natural gas to provide driving power to the vehicle 1.

To meet different power demands, the battery 10 may include a plurality of battery cells 12, where the plurality of battery cells 12 may be connected in series, in parallel, or in series-parallel, where "connected in series-parallel" means "connected in a combination of series and parallel".

As shown in FIG. 2, FIG. 2 is an exploded view of a structure of the battery 10 according to an embodiment of the present application. The battery 10 may include a box 11 and the plurality of battery cells 12, where the battery cells 12 are accommodated in the box 11. The box 11 is configured to provide assembly space for the battery cells 12, and the box 11 may have various structures. In some embodiments, the box 11 may include a first box body 111 and a second box body 112, where the first box body 111 and the second box body 112 cover each other, and the first box body 111 and the second box body 112 jointly define the assembly space for accommodating the battery cells 12. The second box body 112 may be of a hollow structure with one open side, the first box body 111 may be of a plate-shaped structure, and the first box body 111 covers the open side of the second box body 112, so that the first box body 111 and the second box body 112 jointly define the assembly space. Alternatively, the first box body 111 and the second box body 112 each may be of a hollow structure with one open side, and the open side of the first box body 111 covers the open side of the second box body 112. Certainly, the box 11 formed by the first box body 111 and the second box body 112 may be in various shapes, for example, a cylinder or a cuboid.

In the battery 10, the plurality of battery cells 12 may be connected in series, in parallel, or in series-parallel, where "connected in series-parallel" means that the plurality of battery cells 12 are connected in a combination of series and parallel. The plurality of battery cells 12 may be directly connected in series, in parallel, or in series-parallel, and a pack of the plurality of battery cells 12 is accommodated in the box 11. Certainly, the battery 10 may alternatively be a pack formed by first connecting the plurality of battery cells 12 in series, in parallel, or in series-parallel to form battery modules, and then connecting the plurality of battery modules in series, in parallel, or in series-parallel, and the pack is accommodated in the box 11. The battery 10 may further include other structures. For example, the battery 10 may further include a busbar component for implementing an electrical connection between the plurality of battery cells 12.

Each battery cell 12 may be a secondary battery or a primary battery, or may be a lithium-sulfur battery, a sodium-ion battery, or a magnesium-ion battery, but is not limited thereto. The battery cell 12 may be in a shape of a cylinder, a flat body, or a cuboid, or in other shapes.

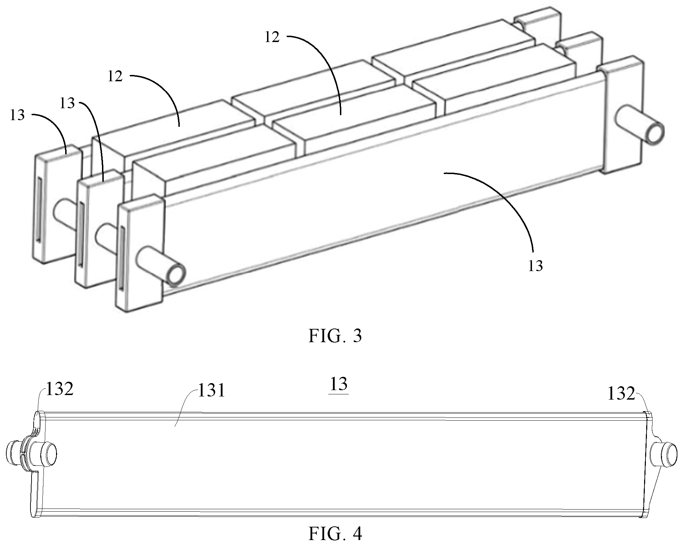

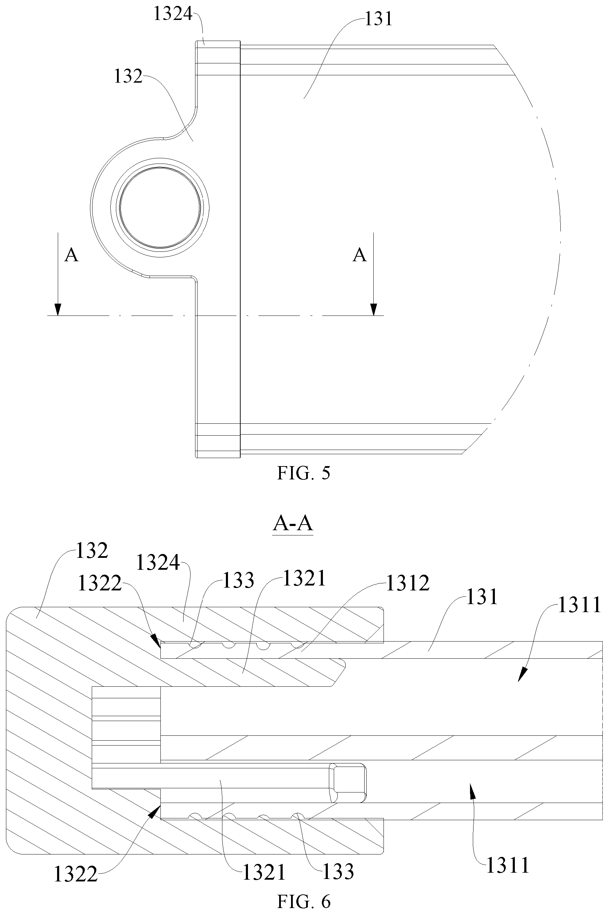

According to some embodiments of the present application, referring to FIG. 3 to FIG. 5, FIG. 3 is a partial schematic structural diagram of the battery 10 according to some embodiments of the present application, where FIG. 3 shows only a fitting form between a plurality of liquid-cooling plate assemblies 13 and the battery cells after the liquid-cooling plate assemblies 13 are assembled; FIG. 4 is a schematic structural diagram of the liquid-cooling plate assembly 13 according to some embodiments of the present application; and FIG. 5 is a partial schematic structural diagram 1 of the liquid-cooling plate assembly 13 according to some embodiments of the present application. An embodiment of the present application provides the liquid-cooling plate assembly 13, where the liquid-cooling plate assembly 13 includes a heat exchange plate 131 and a current collector 132.

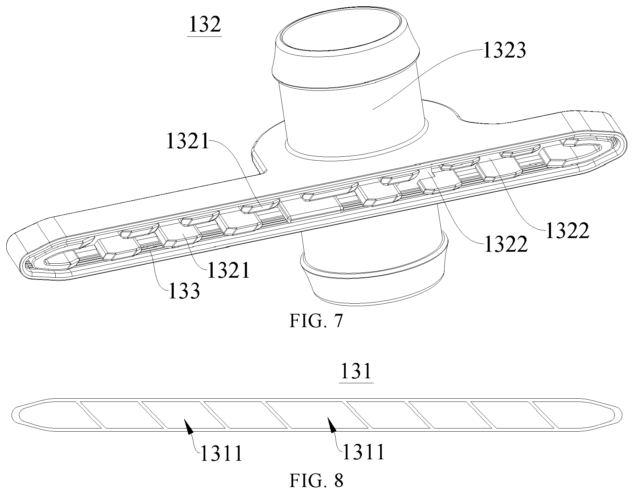

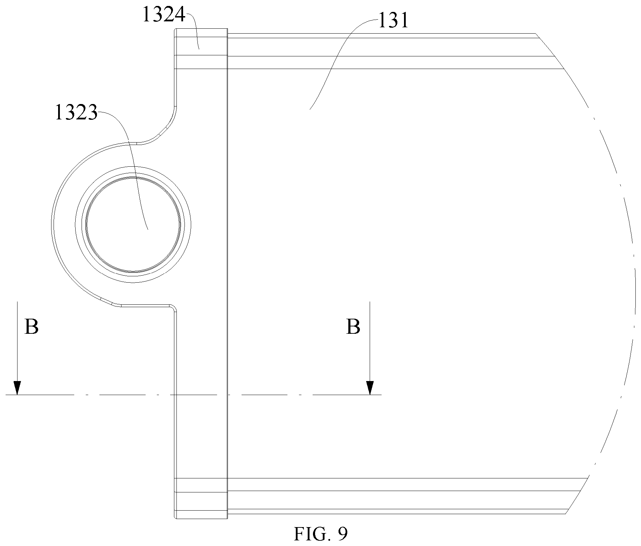

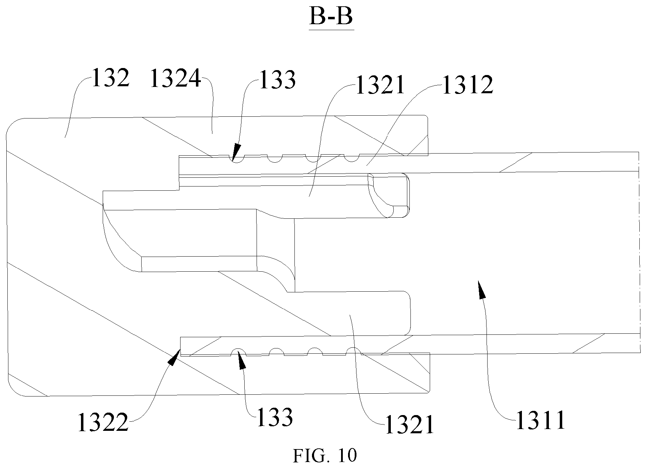

Referring to FIG. 6, FIG. 8, and FIG. 10, FIG. 6 is a cross-sectional view at A-A in FIG. 5; FIG. 8 is a side view of the heat exchange plate according to some embodiments of the present application; and FIG. 10 is a cross-sectional view at B-B in FIG. 9. A plurality of cooling channels 1311 are formed inside the heat exchange plate 131; and the current collector 132 is connected to an end of the heat exchange plate 131 and is in communication with the plurality of cooling channels 1311, where a first section 1324 of one of the current collector 132 and the heat exchange plate 131 is sleeved outside a second section 1312 of the other one of the current collector 132 and the heat exchange plate 131, the first section 1324 is made of a transparent material, the second section 1312 is made of a light-absorbing material, and the surface of at least one of the first section 1324 and the second section 1312 facing the other one of the first section 1324 and the second section 1312 is provided with a connection compensation structure 133 that is not flush with the surface.

Referring to FIG. 8, the plurality of cooling channels 1311 extend along the length direction of the heat exchange plate 131, and are arranged in parallel along a width direction of the heat exchange plate 131. The cooling channels 1311 are configured to allow cooling liquid to flow through, and the cooling liquid may be water, ethanol, or other cooling liquid.

Current collecting space is formed in the current collector 132, the current collector 132 is further provided with a liquid inlet and a liquid outlet for the cooling liquid to flow in and flow out, and the current collector 132 is in communication with the heat exchange plate 131.

The current collector 132 is disposed at the end of the heat exchange plate 131, and the current collecting space of the current collector 132 is in communication with the plurality of cooling channels 1311.

Referring to FIG. 4, there may be two current collectors 132, and the two current collectors 132 are disposed at two ends of the heat exchange plate 131 along the length direction.

The current collector 132 may be sleeved outside the heat exchange plate 131, or the heat exchange plate 131 may be sleeved outside the current collector 132. This may be specifically selected according to an actual use condition.

An outer one of the current collector 132 and the heat exchange plate 131 has the first section 1324, and an inner one of the current collector 132 and the heat exchange plate 131 has the second section 1312.

The outer first section 1324 is made of the transparent material, so that a laser beam passes through the first section 1324 to radiatively heat the inner second section 1312. The inner second section 1312 is made of the light-absorbing material, so that the laser beam radiatively heats an outer surface of the second section 1312, thereby increasing the temperature between the first section 1324 and the second section 1312, and further melting opposite surfaces of the first section 1324 and the second section 1312 and the connection compensation structure 133 by heat. In this way, the first section 1324 and the second section 1312 are connected.

The materials of the first section 1324 and the second section 1312 may be one or a plurality of polypropylene, polyamide, polyphthalamide, and polyphenylene sulfide, the first section 1324 may be a transparent member made of the one or plurality of materials, and the second section 1312 may be a light-absorbing member made of the one or plurality of materials.

The connection compensation structure 133 is not flush with the surface on which the connection compensation structure 133 is located, and the connection compensation structure 133 may protrude from the surface on which the connection compensation structure 133 is located, or may be recessed into the surface on which the connection compensation structure 133 is located. This may be specifically set according to an actual processing condition and an actual use scenario. The connection compensation structure 133 may be integrally formed with the surface on which the connection compensation structure 133 is located.

The laser beam radiatively heats the outer surface of the second section 1312, so that the opposite surfaces of the first section 1324 and the second section 1312 and the connection compensation structure 133 are melted by heat. The connection compensation structure 133 and other planes are melted to different extents, to form an interlocking structure with other solidified materials in shape. Meanwhile, the connection compensation structure 133 is integrally formed with the surface on which the connection compensation structure 133 is located, and areas other than a junction between the connection compensation structure 133 and the surface on which the connection compensation structure 133 is located are connected through cooling and solidification of a molten pool. That is, there are two connection modes on the opposite surfaces of the first section 1324 and the second section 1312, and connection forces in the two connection modes are different and staggered, thereby further improving connection reliability between the first section 1324 and the second section 1312.

The connection compensation structure 133 may be provided at least in the following three positions:
First, the connection compensation structure 133 is provided on an inner surface of the first section 1324 facing the second section 1312, the connection compensation structure 133 is not flush with the inner surface of the first section 1324, and the connection compensation structure 133 may protrude from or be recessed into the inner surface of the first section 1324.
Second, the connection compensation structure 133 is provided on the outer surface of the second section 1312 facing the first section 1324, the connection compensation structure 133 is not flush with the outer surface of the second section 1312, and the connection compensation structure 133 may protrude from or be recessed into the outer surface of the second section 1312.
Third, surfaces of the first section 1324 and the second section 1312 facing each other are both provided with the connection compensation structure 133, and the connection compensation structure 133 may protrude from or be recessed into the surface on which the connection compensation structure 133 is located.

In the liquid-cooling plate assembly 13 of this structure, the outer first section 1324 is made of the transparent material, and the inner second section 1312 is made of the light-absorbing material. The laser beam can pass through the first section 1324 to radiatively heat the outer surface of the second section 1312, heat of the outer surface of the second section 1312 is transferred to the inner surface of the first section 1324 through heat conduction, and the temperature between the first section 1324 and the second section 1312 increases, so that the molten pool is formed between the contacting surfaces of the first section 1324 and the second section 1312. After laser welding is completed, molten materials between the first section 1324 and the second section 1312 are solidified, so that the heat exchange plate 131 is joined to the current collector 132, thereby avoiding joining quality problems such as flux migration caused by brazing. In addition, the surface of the at least one of the first section 1324 and the second section 1312 facing the other one of the first section 1324 and the second section 1312 is provided with the connection compensation structure 133 that is not flush with the surface, so that the connection compensation structure 133 and other surfaces are melted to different extents in a laser welding process, to form an interlocking structure with other parts in shape, thereby further improving connection reliability between the heat exchange plate 131 and the current collector 132.

According to the liquid-cooling plate assembly 13 provided in the embodiments of the present application, the connection compensation structure 133 is provided to form a welded structure by means of self-melting, without introducing a new material at a welding position. This reduces the joining quality problems such as flux migration and contamination caused by brazing, and improves the connection reliability between the heat exchange plate 131 and the current collector 132.

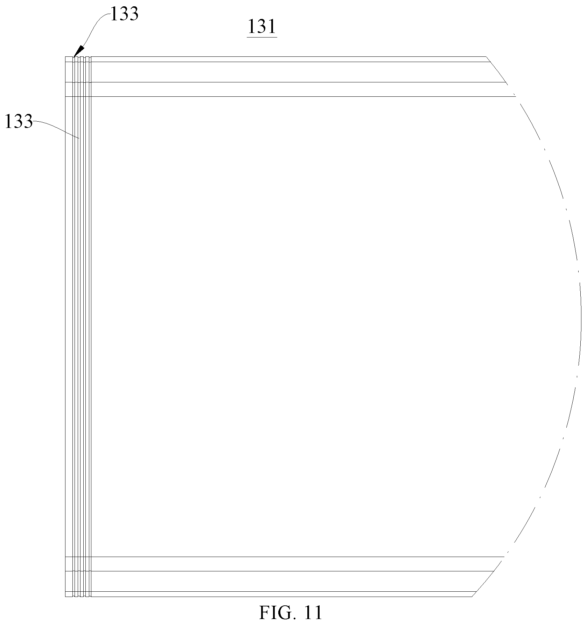

In some embodiments, referring to FIG. 7 and FIG. 11, the connection compensation structure 133 circumferentially extends along the inner surface of the first section 1324, and/or the connection compensation structure 133 circumferentially extends along the outer surface of the second section 1312.

The connection compensation structure 133 is a closed ring to achieve ring sealing of the first section 1324 and the second section 1312.

In this embodiment, the laser welding may be implemented in various manners. For example, the laser welding may be spot welding, and the laser beam moves along an extending direction of the connection compensation structure 133. Alternatively, the laser welding may be annular laser welding. The sleeved first section 1324 and second section 1312 are placed in a welding device, the welding device has an annular laser beam adapted thereto, and the annular laser beam moves along the length direction of the heat exchange plate 131.

In some embodiments, referring to FIG. 6, FIG. 10, and FIG. 11, there are a plurality of connection compensation structures 133, and the plurality of connection compensation structures 133 are arranged at intervals along the length direction of the heat exchange plate 131.

In the embodiments, there may be two or more connection compensation structures 133, for example, four or six connection compensation structures 133. The plurality of connection compensation structures 133 are provided to achieve an interlocking connection between the first section 1324 and the second section 1312, so that connection stability and a sealing effect are further improved, to reduce leakage of the cooling liquid at a junction between the first section 1324 and the second section 1312.

In some embodiments, referring to FIG. 6, FIG. 7, and FIG. 10, the first section 1324 of the current collector 132 is sleeved on the second section 1312 of the heat exchange plate 131, a support rib 1321 is provided in the current collector 132, and the support rib 1321 abuts against an inner wall of the cooling channel 1311.

In the embodiments, the first section 1324 is in interference fit with the second section 1312. Because the first section 1324 is sleeved outside the second section 1312, the inner surface of the first section 1324 generates a pressing force on the second section 1312, and the second section 1312 tends to deform. The deformation of the second section 1312 of the heat exchange plate 131 can be reduced by providing the support rib 1321 that abuts against the inner wall of the cooling channel 1311.

At least a part of the support rib 1321 is located in the first section 1324. When the first section 1324 is sleeved on the second section 1312, at least a part of the support rib 1321 extends into the cooling channel 1311 and abuts against the inner wall of the cooling channel 1311.

In some embodiments, referring to FIG. 7, there are a plurality of support ribs 1321, the plurality of support ribs 1321 are circumferentially arranged at intervals along the inner surface of the first section 1324, and at least one support rib 1321 is provided in each of the plurality of cooling channels 1311.

One support rib 1321 or two or more support ribs 1321 may be provided in each cooling channel 1311, and at least a part of a side wall of the support rib 1321 abuts against the inner wall of the cooling channel 1311.

In some embodiments, the side wall of the support rib 1321 is contoured to the inner wall of the cooling channel 1311 to further reduce the deformation of the second section 1312 of the heat exchange plate 131.

In some embodiments, along the width direction of the heat exchange plate 131, a cooling channel 1311 located at the end is provided with one support rib 1321, and the support rib 1321 is contoured to the cooling channel 1311 at the end. The other cooling channels 1311 are provided with two support ribs 1321 distributed up and down, and the two support ribs 1321 are respectively supported on opposite side surfaces of the cooling channel 1311 in a thickness direction.

It should be noted that, because the support rib 1321 has a specific thickness, an upper wall and a lower wall of the support ribs 1321 in the other cooling channels 1311 abut against an upper side and a lower side of the cooling channel 1311 in one-to-one correspondence, and the side wall of the support rib 1321 abuts against at least a part of a side wall of the cooling channel 1311.

In some embodiments, the first section 1324 is provided with a limiting surface 1322 configured to abut against an outer end surface of the second section 1312.

Referring to FIG. 6, FIG. 7, and FIG. 10, when the limiting surface 1322 is disposed between the first section 1324 and the support rib 1321, and the first section 1324 is sleeved on the second section 1312, the second section 1312 is located between the first section 1324 and the support rib 1321, and the outer end surface of the second section 1312 abuts against the limiting surface 1322 to limit the second section 1312 or the first section 1324 from continuing to move, to protect the heat exchange plate 131 and the current collector 132.

In some embodiments, in the laser welding, the molten materials may flow along a gap between the outer end surface of the second section 1312 and the limiting surface 1322, and the outer end surface of the second section 1312 is joined to the limiting surface 1322 after solidification, to further improve the sealing effect and the connection stability between the heat exchange plate 131 and the current collector 132.

In some embodiments, the first section 1324 of the current collector 132 is sleeved on the second section 1312 of the heat exchange plate 131, and the connection compensation structure 133 may have at least the following various structural forms.

First, the connection compensation structure 133 located on the current collector 132 protrudes from the inner surface of the first section 1324, and the outer surface of the second section 1312 is of a planar structure.

In this embodiment, the molten materials are solidified and then joined to the outer surface of the second section 1312, to connect the heat exchange plate 131 and the current collector 132. The protruding connection compensation structure 133 and other structures in the molten pool have different connection forces because of different melting degrees, thereby forming a double interlocking effect and improving the connection stability.

Second, the connection compensation structure 133 located on the current collector 132 is recessed into the inner surface of the first section 1324.

In this embodiment, the molten materials flow into a recessed area to form an interlocking structure, thereby improving the connection stability between the heat exchange plate 131 and the current collector 132.

Third, the connection compensation structure 133 located on the heat exchange plate 131 is recessed into the outer surface of the second section 1312.

In this embodiment, the recessed connection compensation structure 133 is provided on the outer surface of the second section 1312 of the heat exchange plate 131, to achieve low processing difficulty.

Fourth, the connection compensation structure 133 located on the current collector 132 protrudes from the inner surface of the first section 1324, and the connection compensation structure 133 located on the heat exchange plate 131 is recessed into the outer surface of the second section 1312.

In this embodiment, the molten materials flow into a recessed area, to reduce overflow of the molten materials, improve flatness of a surface of the liquid-cooling plate assembly 13, and facilitate assembly with the battery cells 12. In addition, the molten materials are solidified to join the opposite surfaces of the first section 1324 and the second section 1312, to connect the heat exchange plate 131 and the current collector 132. The protruding connection compensation structure 133, the recessed connection compensation structure, and other structures in the molten pool have different connection forces because of different melting degrees, thereby forming a double interlocking effect and further improving the connection stability.

In the liquid-cooling plate assembly 13 of this structure, the connection compensation structure 133 is provided to form the welded structure by means of self-melting, without introducing a new material at the welding position. This reduces the joining quality problems such as flux migration and contamination caused by brazing, and improves the connection reliability between the first section 1324 and the second section 1312.

According to some embodiments of the present application, the present application further provides a thermal management component. The thermal management component includes a plurality of liquid-cooling plate assemblies 13 in any one of the foregoing embodiments, where the plurality of liquid-cooling plate assemblies 13 are disposed in parallel, and current collectors 132 of two adjacent liquid-cooling plate assemblies 13 are in communication.

Referring to FIG. 3 and FIG. 7, the current collector 132 is provided with a connecting pipe 1323. A plurality of heat exchange plates 131 are disposed at intervals, two adjacent heat exchange plates 131 are in communication through the connecting pipe 1323, and the battery cell 12 is disposed between the two adjacent heat exchange plates 131.

In the thermal management component of this structure, the plurality of liquid-cooling plate assemblies 13 in any one of the foregoing embodiments are disposed, and the liquid-cooling plate assembly 13 is provided with the connection compensation structure 133 to form a welded structure by means of self-melting, without introducing a new material at a welding position. This reduces joining quality problems such as flux migration and contamination caused by brazing, and improves connection reliability between the heat exchange plate 131 and the current collector 132.

According to some embodiments of the present application, the present application further provides a battery 10, including the battery cells 12 and the thermal management component according to the foregoing embodiment, where the heat exchange plate 131 is disposed between two adjacent battery cells 12.

According to the battery 10 in the embodiments of the present application, the thermal management component is disposed, the thermal management component includes the liquid-cooling plate assembly 13, and the liquid-cooling plate assembly 13 is provided with the connection compensation structure 133 to form a welded structure by means of self-melting, without introducing a new material at a welding position. This reduces joining quality problems such as flux migration and contamination caused by brazing, and improves connection reliability between the first section 1324 and the second section 1312.

According to some embodiments of the present application, the present application further provides an electric device, including the battery 10 in any one of the foregoing solutions, where the battery 10 is configured to provide electric energy.

According to the electric device in the embodiments of the present application, the liquid-cooling plate assembly 13 is included, and the liquid-cooling plate assembly 13 is provided with the connection compensation structure 133 to form a welded structure by means of self-melting, without introducing a new material at a welding position. This reduces joining quality problems such as flux migration and contamination caused by brazing, and improves connection reliability between the heat exchange plate 131 and the current collector 132.

It should be noted that, without contradictory, the embodiments in the present application may be combined with the features in the embodiments.

The above descriptions are merely preferred embodiments of the present application, and are not intended to limit the present application. For a person skilled in the art, various modifications and changes may be made to the present application. Any modification, equivalent replacement, or improvement made without departing from the spirit and principle of the present application shall fall within the protection scope of the present application.

## Claims

1. A liquid-cooling plate assembly, **characterized by** comprising:
a heat exchange plate, wherein a plurality of cooling channels are formed inside the heat exchange plate; and
a current collector, wherein the current collector is connected to an end of the heat exchange plate and is in communication with the plurality of cooling channels, wherein
a first section of one of the current collector and the heat exchange plate is sleeved outside a second section of the other one of the current collector and the heat exchange plate, the first section is made of a transparent material, the second section is made of a light-absorbing material, and the surface of at least one of the first section and the second section facing the other one of the first section and the second section is provided with a connection compensation structure that is not flush with the surface.

2. The liquid-cooling plate assembly according to claim 1, wherein
the connection compensation structure circumferentially extends along an inner surface of the first section, and/or the connection compensation structure circumferentially extends along an outer surface of the second section.

3. The liquid-cooling plate assembly according to claim 1 or 2, wherein there are a plurality of connection compensation structures, and the plurality of connection compensation structures are arranged at intervals along the length direction of the heat exchange plate.

4. The liquid-cooling plate assembly according to any one of claims 1 to 3, wherein the first section of the current collector is sleeved on the second section of the heat exchange plate, a support rib is provided in the current collector, and the support rib abuts against an inner wall of the cooling channel.

5. The liquid-cooling plate assembly according to claim 4, wherein
there are a plurality of support ribs, the plurality of support ribs are circumferentially arranged at intervals along the inner surface of the first section, and at least one support rib is provided in each of the plurality of cooling channels.

6. The liquid-cooling plate assembly according to any one of claims 1 to 5, wherein the first section is provided with a limiting surface configured to abut against an outer end surface of the second section.

7. The liquid-cooling plate assembly according to any one of claims 1 to 5, wherein the first section of the current collector is sleeved on the second section of the heat exchange plate; and
a connection compensation structure located on the current collector protrudes from the inner surface of the first section or is recessed into the inner surface of the first section.

8. The liquid-cooling plate assembly according to any one of claims 1 to 5, wherein the first section of the current collector is sleeved on the second section of the heat exchange plate; and
a connection compensation structure located on the heat exchange plate is recessed into the outer surface of the second section.

9. The liquid-cooling plate assembly according to any one of claims 1 to 5, wherein the first section of the current collector is sleeved on the second section of the heat exchange plate; and
a connection compensation structure located on the current collector protrudes from the inner surface of the first section, and a connection compensation structure located on the heat exchange plate is recessed into the outer surface of the second section.

10. A thermal management component, **characterized by** comprising a plurality of liquid-cooling plate assemblies according to any one of claims 1 to 9, wherein the plurality of liquid-cooling plate assemblies are disposed in parallel, and current collectors of two adjacent liquid-cooling plate assemblies are in communication.

11. A battery, **characterized by** comprising battery cells and the thermal management component according to claim 10, wherein the heat exchange plate is disposed between two adjacent battery cells.

12. An electric device, **characterized by** comprising the battery according to claim 11, wherein the battery is configured to supply electric energy.
